# EUROPÄISCHE PATENTSCHRIFT

(11) **EP 3 676 137 B1**
(45) Veröffentlichungstag und Bekanntmachung des Hinweises auf die Patenterteilung: **12.05.2021**
(21) Anmeldenummer: 18728853.5
(22) Anmeldetag: 29.05.2018
(51) Int. Cl.: B60T 13/40

(54) **PARKBREMS-VENTILEINRICHTUNG**
PARKING BRAKE VALVE ASSEMLBY
DISPOSITIF DE VALVE D'UN FREIN DE STATIONNEMENT

(30) Priorität: 31.08.2017 DE 102017008184
(43) Veröffentlichungstag der Anmeldung: 08.07.2020
(73) Patentinhaber: WABCO GmbH, 30453 Hannover (DE)
(72) Erfinder: VAN THIEL, Julian, 30938 Grossburgwedel (DE)
(74) Vertreter: Schiller, Harald
(86) Internationale Anmeldenummer: PCT/EP2018/064072
(87) Internationale Veröffentlichungsnummer: WO 2019/042602

(56) Entgegenhaltungen:
- EP-A1- 3 112 230
- WO-A1-2015/154787
- WO-A2-2008/101592
- WO-A2-2009/046780
- WO-A2-2009/098003

## Beschreibung

Die Erfindung betrifft eine Parkbrems-Ventileinrichtung zur Ansteuerung einer Federspeicher-Feststellbremse und eines trailer-control-Ventils für ein angeschlossenes Anhänger-Bremssystem.

Federspeicher-Feststellbremsen von Nutzfahrzeugen sind im drucklosen bzw. entlüfteten Zustand selbstsperrend und werden über eine Parkbrems-Ventileinrichtung befüllt bzw. belüftet, um sie zu lösen. Elektro- pneumatische Handbremsen (EPH) ermöglichen ein Lösen und Feststellen der Federspeicher-Feststellbremse bzw. Parkbremse durch elektrische Betätigungen. Aus Gründen der Sicherheit sind diese vorzugsweise bistabil ausgebildet, so dass ohne Bestromung sowohl der Parkzustand mit eingelegter Federspeicher-Feststellbremse (Parkbremse) als auch der Fahrzustand mit gelöster bzw. befüllter Federspeicher-Feststellbremse sicher gehalten werden.

Anhänger-Bremssysteme werden über das Zugfahrzeug angesteuert, wozu ein trailer-control-Ventil (TCV) vorgesehen ist, das im Allgemeinen die pneumatische Kupplung (z. B. gelber und roter Kupplungskopf) für das Anhänger-Bremssystem ansteuert, d. h. die Anhänger-Steuerleitung und Anhänger-Vorratsleitung. Im Allgemeinen findet im trailer-control-Ventil eine Druckluft-Umkehr eines eingegebenen pneumatischen Steuersignals statt, so dass das trailer-control-Ventil durch ein pneumatisches Steuersignal angesteuert wird, das es invertiert an das Anhänger-Bremssystem ausgibt; hierdurch wird unter anderem erreicht, dass die Betriebsbremsen des Anhängers gebremst werden, wenn das Zugfahrzeug über seine Feststellbremse gebremst wird.

In der Fahrstellung sind die Federspeicher-Feststellbremsen des Zugfahrzeugs und die Betriebsbremse des Anhängerfahrzeugs gelöst. In der Parkstellung ist die Federspeicher-Feststellbremse eingelegt, d. h. entlüftet, und die Betriebsbremse des Anhängerfahrzeugs über das TCV belüftet.

Weiterhin ist im Allgemeinen eine sogenannte Anhänger-Control-Stellung vorgesehen, bei der die Federspeicher-Feststellbremse im Zugfahrzeug eingelegt ist, aber die Betriebsbremse im Anhänger gelöst ist; hierdurch kann überprüft werden, ob das Zugfahrzeug alleine den Anhänger mit seinem gelösten Anhänger-Bremssystem halten kann, so dass auch z. B. bei einer Leckage oder einem Versagen der pneumatisch beaufschlagten Betriebsbremse im Anhänger die sichere Federspeicher-Feststellbremse des Zugfahrzeugs auch den Anhänger allein halten kann.

Problematisch sind im Allgemeinen Leckagen im pneumatischen Steuersystem und der Ventile, sowie auch ein elektrisches Versagen, die nicht dazu führen sollen, dass der jeweilige Zustand gefährdet wird.

WO 2008/101592 A2 offenbart ein Feststellbremsmodul für eine druckmittelbetriebene Bremsanlage. Es weist eine erste, druckmittelmengenverstärkende Ventileinrichtung mit einem Einlass auf, der mit einem Druckmittelvorratsbehälter verbindbar ist, einem Auslass, der mit wenigstens einem Federspeicherteil eines Federspeicherbremszylinders verbindbar ist, und einem mit einer Steuerleitung verbundenen Steuereingang. Ferner weist das Feststellbremsmodul eine zweite Ventileinrichtung auf mit wenigstens einem ersten, als Anhängersteuerventil-Anschluss dienenden Anschluss, der mit einem Anhängersteuerventil zum Steuern einer Anhängerbremse verbindbar ist. Ein am ersten Anschluss der zweiten Ventileinrichtung herrschender Druck ist unabhängig vom Druck im Druckmittelvorratsbehälter sowie von einem am Auslass der druckmittelmengenverstärkenden Ventileinrichtung herrschender Druck einstellbar.

Der Erfindung liegt daher die Aufgabe zugrunde, eine Parkbrems-Ventileinrichtung zu schaffen, die mit geringem Aufwand eine hohe Sicherheit sowohl für das eigene Bremssystem als auch einen angeschlossenen Anhänger ermöglicht.

Diese Aufgabe wird durch eine Parkbrems-Ventil- Einrichtung nach Anspruch 1 gelöst. Die Unteransprüche beschreiben bevorzugte Weiterbildungen. Weiterhin ist ein elektro-pneumatisches Bremssystem mit einer derartigen Parkbrems-Ventileinrichtung vorgesehen.

Die Parkbrems-Ventileinrichtung ist somit mit ihrem Druckluft-Eingang an eine Druckluftversorgung, z. B. an einen Druckluftspeicher, und mit ihrem Parkbrems-Ausgang an eine Federspeicher-Feststellbremse angeschlossen, wozu sie im Allgemeinen ein Relaisventil aufweist, das den Druckluft-Eingang und den Parkbrems-Ausgang miteinander verbindet. Das Relaisventil wird über einen Relaisventil-Vorsteuerbereich, der auf den pneumatischen Steuereingang des Relaisventils einwirkt, angesteuert. Weiterhin weist die Parkbrems-Ventileinrichtung einen trailer-control-Steuerausgang auf, der ein nachfolgendes trailer-control-Ventil (TCV) für das Anhängerbremssystem ansteuert, und weiterhin einen TCV-Vorsteuerbereich zur Ansteuerung des trailer-control-Steuerausgangs.

Hierbei sind zwei elektrisch ansteuerbare Ventile vorgesehen, mit denen die verschiedenen Stellungen einstellbar sind; ein Einlass-Ventil ist elektrisch ansteuerbar und verbindet jeweils den TCV-Vorsteuerbereich mit dem Druckluft-Eingang oder sperrt ihn hiervon; weiterhin ist ein elektrisch ansteuerbares Verbindungs-Ventil zum wahlweisen Verbinden des TCV-Vorsteuerbereichs und des Relaisventil-Vorsteuerbereichs in Abhängigkeit eines zweiten elektrischen Steuersignals vorgesehen.

Der Erfindung liegt hierbei der Gedanke zugrunde, dass über ein gemeinsames Einlass-Ventil der TCV-Vorsteuerbereich und über ein Verbindungsventil auch der Relaisventil-Vorsteuerbereich angesteuert wird. Somit können durch die beiden elektrisch angesteuerten Ventile beide Vorsteuerbereiche mit Druckluft beaufschlagt werden, um zum einen das Relaisventil pneumatisch auszusteuern, so dass es über den Parkbrems-Ausgang die Federspeicher-Feststellbremse belüftet und somit löst, und weiterhin auch über den TCV-Vorsteuerbereich den trailer-control-Steuerausgang zu belüften. Somit sind bereits eine Fahrtstellung mit gelösten Bremsen und Parkstellung mit eingelegten Bremsen im Zugfahrzeug und Anhänger möglich. Weiterhin kann die Anhänger-Kontrollstellung durch dieselben elektrischen Ventile eingestellt werden, indem der TCV-Vorsteuerbereich weiterhin belüftet wird und somit den TCV-Steuerausgang belüftet, jedoch der Relaisventil-Vorsteuerbereich über das geeignet angesteuerte Verbindungsventil entlüftet wird und somit die Federspeicher-Feststellbremse einlegt.

Hierbei sind unterschiedliche schaltungstechnische Ausbildungen dieser Ventile möglich: Gemäß einer bevorzugten Ausbildung ist das Verbindungsventil als elektrisch angesteuertes 3/2-Ventil ausgebildet, das vorzugsweise in elektrisch nicht betätigter Grundstellung die beiden Vorsteuerbereiche miteinander verbindet. Somit kann durch das erste elektrische Steuersignal jeweils eingestellt werden, ob beide Bremssysteme sperren oder lösen, d. h. in Parkstellung oder Fahrtstellung sind.

Das zweite elektrische Steuersignal ermöglicht bei offenem Einlass-Ventil ein Trennen des Relaisventil-Vorsteuerbereichs, insbesondere auch ein Entlüften des Relaisventil-Vorsteuerbereichs, um die Federspeicher-Feststellbremse einzulegen, obwohl über den TCV-Vorsteuerbereich der trailer-control-Steuerausgang weiter belüftet ist. Somit ist die Anhänger-Kontrollstellung eingelegt.

Das Relaisventil ist vorteilhafterweise über eine selbsthaltende Bypass-Schaltung angesteuert, die an den Relaisventil-Vorsteuerbereich und somit an den pneumatischen Steuereingang des Relaisventils angeschlossen ist. Die Bypass-Schaltung kann hierbei bei einmaliger hinreichender Druckbeaufschlagung des Relaisventil-Vorsteuerbereichs diesen selbsttätig auf den Druckluft-Eingang bzw. auf den Eingang des Relaisventils legen, so dass die offene Stellung des Relaisventils sicher gehalten wird. Weiterhin kann durch aktives Entlüften des Relaisventil-Vorsteuerbereichs vorteilhafterweise der Relaisventil-Vorsteuerbereich direkt an eine Entlüftung gelegt werden, so dass auch der sperrende Zustand des Relaisventils, d. h. die Parkstellung, sicher gehalten wird. Hierdurch können Leckagen, die zu kleinen Luftströmungen führen, sicher kompensiert werden; kleinere Leckagen in Leitungen oder auch Undichtigkeiten der Ventile führen somit erfindungsgemäß nicht zu einer Schaltung des Relaisventils, so dass der Relaisventil-Vorsteuerbereich sicher in seiner einmal aktiv eingestellten Stellung gehalten wird. Die Bypass-Schaltung kann hierbei insbesondere über pneumatisch angesteuerte 2/2-Sperrventile mit jeweils einer Drossel ausgebildet werden, jeweils zwischen dem Relaisventil-Vorsteuerbereich und dem Druckluft-Eingang sowie zwischen dem Relaisventil-Vorsteuerbereich und dem Parkbrems-Ausgang geschaltet sind.

Hierdurch wird insbesondere auch der Vorteil erreicht, dass die selbstsichernde Haltung bzw. Selbsterhaltung des Druckzustandes des Relaisventil-Vorsteuerbereichs über das im Allgemeinen offene Verbindungsventil auch an dem TCV-Vorsteuerbereich gehalten wird, so dass die hohe Sicherheit nicht nur für die Ansteuerung des Relaisventils und somit der Federspeicher-Feststellbremse, sondern auch des TCV gegeben ist.

Hierbei kann der TCV-Vorsteuerbereich gemäß unterschiedlichen Ausbildungen entweder direkt an den TCV-Steuerausgang gelegt werden, oder der TCV-Vorsteuerbereich wird über eine ergänzende pneumatische Schaltung mit sowohl dem TCV-Vorsteuerbereich als auch dem Parkbrems-Ausgang verbunden, z. B. einem select-high-Ventil oder einem pneumatisch angesteuerten Ventil, um bei Belüftung des Parkbrems-Ausgang auch immer eine sichere Belüftung des TCV-Steuerausgangs sicherzustellen; somit kann der größere Volumendurchsatz des Relaisventils auch für den TCV-Steuerausgang mit genutzt werden, der somit auch kleinere Leckagen z. B. in der Verbindungsleitung zum Anhänger sicher kompensiert.

Die Erfindung wird im Folgenden anhand der beiliegenden Zeichnungen an einigen Ausführungsformen näher erläutert. Es zeigen:
- Fig. 1: ein elektro-pneumatisches Schaltbild eines Ausschnitts aus einem Bremssystem mit einer Parkbrems-Ventileinrichtung gemäß einer ersten Ausführungsform der Erfindung;
- Fig. 2: ein elektro-pneumatisches Schaltdiagramm eines Ausschnitt aus einem Bremssystem mit einer Parkbrems-Ventileinrichtung gemäß einer zweiten Ausführungsform der Erfindung mit select-high-Ventil;
- Fig. 3: ein entsprechendes elektro-pneumatisches Schaltdiagramm gemäß einer dritten Ausführungsform der Erfindung mit ergänzendem pneumatischen TCV-Ansteuerventil.

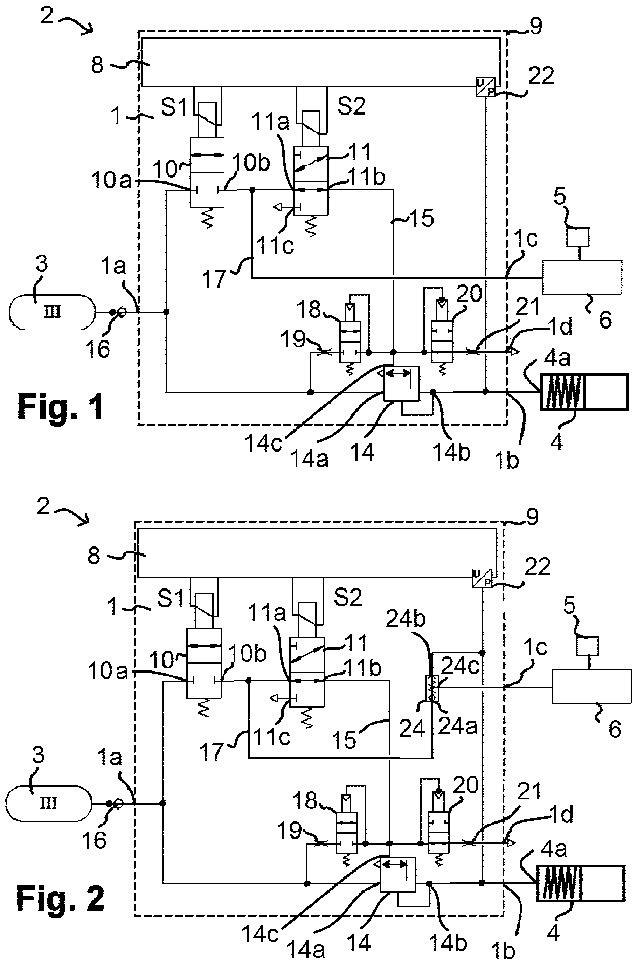

Die Figuren 1 bis 3 zeigen jeweils ein elektro-pneumatisches Schaltschema eines hier relevanten Ausschnitts eines elektro-pneumatischen Bremssystems 2 eines Nutzfahrzeugs, das eine elektro-pneumatische Parkbrems-Ventileinrichtung 1, einen Druckluft-Speicher 3 zur Druckluftversorgung, eine durch die Parkbrems-Ventileinrichtung 1 angesteuerte Federspeicher-Feststellbremse (Parkbremse) 4 und ein trailer-control-ventil (TCV) 6 für ein nachfolgendes Anhänger (trailer)-Bremssystem 5 eines Anhängers aufweist. Die Federspeicher-Feststellbremse 4 ist üblicher Weise im drucklosen, nicht befüllten Zustand eingelegt und wird durch Belüften bzw. Druckluft-Befüllung über ihren Eingang 4a gelöst. Die Parkbrems-Ventileinrichtung 1 wird von einer elektronischen Steuereinrichtung (ECU) 8 angesteuert und bildet mit der ECU 8 ein Parkbrems-Modul 9. Die ECU 8 kann wiederum in üblicher Weise zum Beispiel vom Fahrer über einen Parkbrems-Schalter und ein Betätigungssignal betätigt werden; weiterhin kann die ECU 8 auch im Rahmen einer Fahrerassistenz-Funktion oder im Rahmen eines Fahrstabilitäts-Programm angesteuert werden, um gegebenenfalls die Federspeicher-Feststellbremse 4 einzulegen, zum Beispiel bei Versagen einer Betriebsbremse.

Die Parkbrems-Ventileinrichtung 1 kann zum Beispiel einteilig bzw. in einem Gehäuse ausgebildet und mit der ECU 8 verbunden werden, sodass das Parkbrems-Modul 9 eine Einheit bildet.

Die Parkbrems-Ventileinrichtung 1 weist einen Druckluft-Eingang 1a auf, der über ein Rückschlagventil 16 an den Druckluft-Speicher 3 angeschlossen ist und somit zum Beispiel mit einem Systemdruck p0 versorgt wird. An den Druckluft-Eingang 1a ist ein Einlassventil 10, das als selbstsperrendes 2/2-Solenoid-Sperrventil ausgebildet ist, angeschlossen. Weiterhin ist an den Druckluft-Eingang 1a über ein Relaisventil 14 ein Parkbrems-Ausgang 1b angeschossen, an den die Federspeicher-Feststellbremse 4 angeschlossen ist. Das Relaisventil 14 wird über einen Relaisventil-Vorsteuerbereich 15 angesteuert, der wiederum über das Einlassventil 10 und ein an das Einlassventil 10 angeschlossenes Auslassventil 11 angesteuert wird. Das Auslassventil 11 ist als 3/2-Solenoid-Ventil ausgebildet und verbindet in seiner Grundstellung den Relaisventil-Vorsteuerbereich 15 mit dem Ausgang 10b des Einlassventils 10.

Zwischen dem Ausgang 10b des Einlassventils 10 und dem Eingang 11a des Auslassventils 11 ist ein TCV-Vorsteuerbereich 17 ausgebildet, der an einen TCV-Steuerausgang 1c der Parkbrems-Ventileinrichtung 1 angeschlossen ist. Der TCV-Vorsteuerbereich 17 kann somit durch Ansteuerung des Einlassventils 10 mittels eines ersten elektrischen Steuersignals S1 mit dem Druckluft-Eingang 1a und somit dem Druckluftspeicher 3 verbunden und mit Druck beaufschlagt werden. In der Grundstellung des Auslassventils 11 sind der Relaisventil-Vorsteuerbereich 15 und der TCV-Vorsteuerbereich 17 miteinander verbunden; wenn die ECU 8 über ein zweites elektrisches Steuersignal S2 das Auslassventil 11 aussteuert, wird diese Verbindung geschlossen, wobei der TCV-Vorsteuerbereich 17 an dem Auslassventil 11 gesperrt wird und der Relaisventil-Vorsteuerbereich 15 über das ausgesteuerte Auslassventil 11 entlüftet wird, das heißt an einen Entlüftungs-Anschluss 11c angeschlossen wird. Der Entlüftungs-Anschluss 11c, sowie die weiteren Entlüftungsanschlüsse, insbesondere die Entlüftung des Relaisventils 14 sowie ein Entlüftungsanschluss 1d der Parkbrems-Ventileinrichtung zur Entlüftung des Relaisventil-Vorsteuerbereichs 15 können hier gemeinsam ausgebildet werden.

Der Relaisventil-Vorsteuerbereich 15 ist durch eine Bypass-Schaltung 18, 19, 20, 21 selbsthaltend bzw. seinen Zustand speichernd ausgebildet: der pneumatische Steuereingang 14c des Relaisventils 14 liegt an dem Relaisventil-Vorsteuerbereich 15, der weiterhin über ein Eingangs-Bypass-Ventil 18 und eine Drossel 19 an den Druckluft-Eingang 1a angeschlossen ist, weiterhin ist der Relaisventil-Vorsteuerbereich 15 in entsprechender Weise über ein Auslass-Bypass-Ventil 20 und eine Drossel 21 an den Entlüftungsanschluss 1d angeschlossen. Das Bypass-Eingangs-Ventil 18 ist selbstsperrend und wird durch den Relaisventil-Vorsteuerbereich 15 bei Druckbeaufschlagung geöffnet, sodass der Relaisventil-Vorsteuerbereich 15 dann über das offene Bypass-Eingangs-Ventil 18 und die Drossel 19 an den DruckluftEingang 1a angeschlossen ist. Entsprechend ist das Bypass-Ausgangs-Ventil 20 in Grundzustand offen und wird durch den Relaisventil-Vorsteuerbereich 15 in seine sperrende Stellung geschaltet, sodass der Relaisventil-Vorsteuerbereich 15 in seinem drucklosen Zustand über das offene Bypass-Ausgangs-Ventil 20 und die Drossel 21 an den Entlüftungsanschluss 1d angeschlossen ist und somit auch entlüftet bleibt, und im Falle einer - auch kurzen - Druckluftbeaufschlagung über das offene Auslassventil 11 und das offene Einlassventil 10 die beiden Bypass-Ventile 18, 20 derartig schaltet, dass der Relaisventil-Vorsteuerbereich 15 über das geöffnete Bypass-Eingangs-Ventil 18 sich selbst an den Drucklufteingang 1a und somit den Systemdruck p0 legt, und weiterhin das Bypass-Ausgangs-Ventil 20 und somit seine Entlüftung sperrt. Die Bypass-Schaltung 18, 19, 20, 21 dient somit dazu, einen einmal über das Einlassventil 10 und Auslassventil 11 eingegebenen Druckzustand des Relaisventil-Vorsteuerbereichs 15 zu speichern.

Durch die Drosseln 19 und 21, die wie in Figur 1 gezeigt in Reihe vor bzw. hinter den Bypass-Ventilen 18, 19, aber auch zum Beispiel integriert in den Bypass-Ventilen 18, 19 ausgebildet sein können, wird eine Zeitkonstante eingestellt, die eine Umsteuerung des Druckzustandes des Relaisventil-Vorsteuerbereichs 15 ermöglicht: durch Ansteuerung des Einlassventils 10 und des Auslassventils 11 kann der Relaisventil-Vorsteuerbereich 15 mit Druck versorgt werden, ohne dass das bis dahin offene Ausgangs-Bypass-Ventil 20 diese Druckzufuhr sofort entlüftet, da die Drossel (Ausgangs-Drossel) 21 einen zu schnellen Druckverlust verhindert; somit wird der in den Relaisventil-Vorsteuerbereich 15 eingegebene Druckstoß mit hinreichender Sicherheit das Bypass-Ausgangs-Ventil 20 umschalten und somit den Entlüftungsanschluss 1d sperren, bevor er über die Drossel 21 zu sehr an Druck verloren hat. Entsprechendes gilt für den Eingangsbereich: der unter Druck stehende Relaisventil-Vorsteuerbereich 15 hält das Bypass-Eingangs-Ventil 18 über die Drossel 19 offen; falls jedoch das Auslassventil 11 über das zweite elektrische Steuersignal S2 angesteuert wird und somit der Relaisventil-Vorsteuerbereich 15 über das Auslassventil 11 entlüftet wird, schaltet das Bypass-Eingangs-Ventil 18 hinreichend schnell zurück, ohne dass über die Drossel 19 genügend Druckluft nachfließt, um den Druck im Relaisventil-Vorsteuerberiech 15 aufrechtzuerhalten.

Grundsätzlich sollten beide Sperrventile 18, 19 gleichzeitig schalten; es kann aber auch ein Druckwert-Bereich im Relaisventil-Vorsteuerbereich 15 zugelassen werden, bei dem beide Sperrventile 18, 19 offen sind; dies kann als kurzzeitiger Zustand beim Umschalten zugelassen werden.

Somit können über die elektrischen Steuersignale S1 und S2 zum einen der Relaisventil-Vorsteuerbereich 15 und zum anderen der TCV-Vorsteuerbereich 17 eingestellt werden: in der in Figur 1 gezeigten Grundstellung mit S1=0, S2=0 sind die Vorsteuerbereiche 15, 17 über das offene Auslassventil 11 miteinander verbunden und über das Bypass-Ausgangs-Ventil 20 an den Entlüftungsanschluss 1d angelegt, so dass beide Vorsteuerbereiche 15 und 17 entlüftet sind. Das Relaisventil 14 sperrt und entlüftet somit den Parkbrems-Ausgang 1b, sodass die Federspeicher-Feststellbremse (Parkbremse) 4 eingelegt ist, und weiterhin das TCV 6 einen drucklosen Eingang bekommt, den es invertiert und somit im Anhänger-Bremssystem 5 die Betriebsbremse einlegt. Somit sind das Nutzfahrzeug 2 und der Anhänger mit seinem Anhänger-Bremssystem 5 in ihrer gebremsten Parkstellung.

Bei S1=1, S2=0 wird über das offene Einlassventil 10 zunächst der TCV-Vorsteuerbereich 17 und über das weiterhin offene Auslassventil 11 auch der Relaisventil-Vorsteuerbereich 15 unter Druck gesetzt, sodass das Relaisventil 14 öffnet und die Federspeicher-Feststellbremse belüftet, sodass die Parkbremse gelöst wird; weiterhin wird über den Systemdruck im TCV-Vorsteuerbereich 17 das TCV 6 mit Druck beaufschlagt, das wiederum diesen Druck invertiert und somit die Betriebsbremse im Anhänger-Bremssystem 5 löst. Somit ist das Nutzfahrzeug 1 bzw. die Fahrzeug-Kombination in Fahrstellung, das heißt mit gelösten Bremsen.

Weiterhin ist eine Anhänger-Kontrollstellung vorgesehen, bei der S1=1, S2=1 ist:
Durch S1=1 wird wiederum der TCV-Vorsteuerbereich 17 mit Druck beaufschlagt, und dieses Drucksignal in TCV 6 invertiert, sodass die Anhänger-Betriebsbremse im Anhänger-Bremssystem 5 gelöst wird. Da jedoch ebenfalls S2=1 ist, wird auch das Auslassventil 11 ausgesteuert und entlüftet den Relaisventil-Vorsteuerbereich 15, sodass das Relaisventil 14 sperrt und die Federspeicher-Feststellbremse 4 entlüftet, das heißt die Parkbremse einlegt.

In dieser Anhänger-Kontrollstellung kann somit überprüft werden, ob das bremsende Nutzfahrzeug 2 den gelösten Anhänger bzw. den Anhänger mit gelöstem Anhänger-Bremssystem 5 halten kann.

Ein Drucksensor 22 ist vorgesehen, um den Druck im Parkbrems-Ausgang 1b, das heißt dem Zustand der Federspeicher-Feststellbremse 4 zu messen.

Die Ausführungsform der Figur 2 unterscheidet sich von der ersten Ausführungsform der Figur 1 dahingehend, dass der TCV-Vorsteuerbereich 17 an einen ersten Eingang 24a eines select-high-Ventils 24 angeschlossen ist, dessen zweiter Eingang 24b an den Parkbrems-Ausgang 1b angeschlossen ist. Der Ausgang 24c, der somit immer den höheren der beiden Eingänge 24a, 24b erfährt, ist an den TCV-Steuerausgang 1c und somit das TCV 6 angeschlossen.

Bei der Ausführungsform der Figur 2 mit dem zusätzlichen select-high-Ventil 24 mit Vorzugsschaltstellung wird insbesondere eine gute Entlüftung des TCV 6 und ihrer Zuleitung über den Ausgang 24c und den Eingang 24b sowie das Relaisventil 14 ermöglicht, so dass keine Entlüftung über den Vorsteuerbereich 17 erforderlich ist. Weiterhin wird sichergestellt, dass an dem TCV-Steuerausgang 1c kein niedrigerer Druck als am Parkbrems-Ausgang 1b anliegt, das heißt insbesondere dass das offene Relaisventil 14 nicht nur am Parkbrems-Ausgang 1b, sondern über das select-high-Ventil 24 auch am TCV-Steuerausgans 1c anliegt und somit durch den größeren Volumendurchsatz des Relaisventils 14 ein schneller und sicherer Schaltvorgang ermöglicht ist. Grundsätzlich bietet auch Figur 1 durch Öffnen des Einlassventils 10 eine Druckluftbeaufschlagung des TCV-Steuerausgangs 1c, jedoch ermöglicht das Relaisventil 14 in Fig. 2 grundsätzlich einen größeren Volumendurchsatz.

Bei der Ausführungsform der Figur 2 wird - wie auch bei der Ausführungsform der Fig. 1 - ermöglicht, dass das TCV 6 mit Druck beaufschlagt wird, ohne dauerhaft das Einlassventil 10 zu beanspruchen: wie oben mit Bezug zu der Ausführungsform der Figur 1 beschrieben ist an das Relaisventil 14 eine Bypass-Schaltung 18, 19, 20, 21 angeschlossen, die somit bei einmaliger Beaufschlagung des pneumatisches Steuereingangs 14c ihren Zustand hält, bis der Druck im Relaisventil-Vorsteuerbereich 15 wieder aktiv geändert wird. Somit kann die Federspeicher-Feststellbremse 4 durch das sich offen haltende Relaisventil 14 mit Druck beaufschlagt und somit in gelöster Fahrstellung verbleiben, ohne dass hierzu das Einlassventil 10 weiter geöffnet sein muss, das heißt auch mit S1=0, nachdem das Einlassventil 10 einmal geschaltet wurde. Gemäß Figur 2 kann dieser Druckzustand über das select-high-Ventil 24 auch auf den TCV-Steuerausgang 1c ausgegeben werden, auch wenn nachfolgend S1=0 gesetzt wird und somit das Einlassventil 10 sperrt. Somit wird gemäß Figur 2 das TCV 6 in dieser Situation nicht mehr über den TCV-Vorsteuerbereich 17, sondern über das Relaisventil 14 angesteuert. Weiterhin ist in Fig. 2 eine Ansteuerung des TCV-Steuerausgangs 1c über das Relaisventil 14 ermöglicht, dass einen hohen Luftdurchsatz ermöglicht und somit ein schnelles Schalten und auch eine Kompensation kleinerer Leckagen z. B. in der Steuerleitung zum Anhänger-Bremssystem 5 sicher stellt.

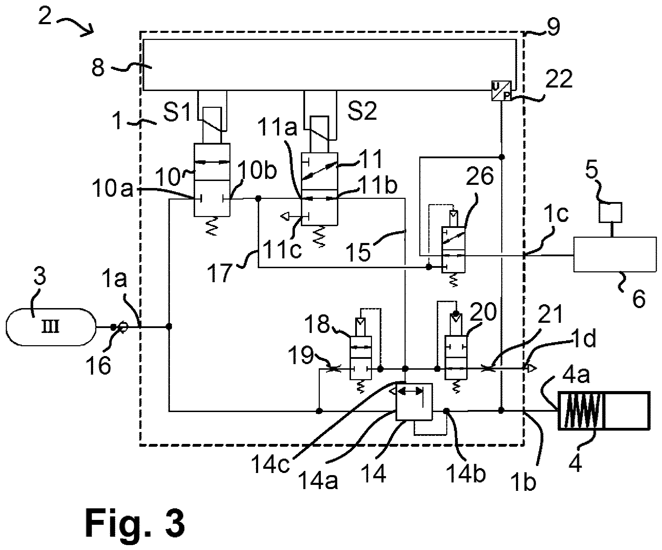

Die Ausführungsform der Figur 3 zeigt eine der Figur 2 entsprechende Funktionalität mit einem TCV-Ansteuerventil 26, das hier als pneumatisch angesteuertes 3/2-Wegeventil ausgelegt ist: das TCV-Ansteuerventil 26 wird bei einmaliger Ansteuerung des Einlassventils 10, das heißt mit S1=1, durch Druckluft-Beaufschlagung des TCV-Vorsteuerbereichs 17 geschaltet, da der pneumatische Steuereingang 26d mit seinem ersten Eingangsanschluss 24a an den TCV-Vorsteuerbereich 17 angeschlossen ist. Somit schaltet das TCV-Vorsteuerventil 26 in seine betätigte Stellung, in der der TCV- Vorsteuerbereich 17 an den TCV-Steuerausgang 1c und somit an das TCV 6 angeschlossen ist. Somit wird eine sichere Ansteuerung über den unter Druck stehenden TCV-Vorsteuerbereich 17 gewährleistet. Falls jedoch S1=0 und somit das Einlassventil 10 sperrt, hängt die Druckluft-Beaufschlagung des TCV 6 von dem Zustand des Relaisventils 14 ab: falls das Relaisventil 14 sperrt und somit auch die Federspeicher-Feststellbremse 4 entlüftet ist und somit die Parkbremse eingelegt ist, liegt über den zweiten Eingangsanschluss 26 b ebenfalls kein Druck an dem TCV-Steuerausgang 1c an. Falls jedoch das Relaisventil 14 durch die selbsthaltende Bypass-Schaltung 18, 19, 20, 21 in seiner betätigten Stellung selbsttätig gehalten wird, liegt der am Parkbrems-Ausgang 1b liegende Druck über das TCV-Vorsteuerventil 26 auch am TCV-Steuerausgang 1c und somit am TCV 6 an. Somit bietet die Schaltung der Figur 3 die gleiche Funktionalität wie diejenige der Figur 2.

Auch die Ausführungsform der Fig. 3 ermöglicht somit eine gute Entlüftung des TCV 6 und seiner Zuleitung über das TCV-Ansteuerventil 26, das nur durch entsprechend hohen Schaltdruck in seine geschaltete Stellung gebracht wird; hierdurch wird sichergestellt, dass der Hauptteil des Luftvolumens im TCV 6 und dessen Zuleitung über das Relaisventil 14 entlüftet wird.

Die Entlüftung des TCV-Vorsteuerbereichs 17 wird somit bei den Ausführungsformen vorzugsweise indirekt über den Relaisventil- Vorsteuerbereich 15 realisiert. Dazu kann es je nach Applikation das Auslassventil 11 mehrmals gepulst werden, wodurch der Druck weiter abgebaut werden kann, je nach Auslegung der Druckschaltschwellen der Bypassventile.

### Bezugszeichenliste (Teil der Beschreibung)

- 1: Parkbrems-Ventileinrichtung
- 1a: Druckluft-Eingang
- 1b: Parkbrems-Ausgang
- 1c: TCV-Steuerausgang
- 1d: Entlüftungsanschluss
- 2: elektropneumatisches Bremssystem
- 3: Druckluft-Speicher
- 4: Federspeicher-Feststellbremse, Parkbremse, Feststellbremse
- 5: Anhänger-Bremssystem
- 6: trailer-control-ventil (TVC für das Anhänger-Bremssystem 5)

- 8: ECU, elektronische Steuereinrichtung
- 9: Parkbrems-Modul
- 10: Einlassventil, selbstsperrendes 2/2-Solenoidventil
- 10a: Eingang des Einlassventils
- 10b: Ausgang des Einlassventils
- 10c: elektrischer Steuereingang
- 11: Verbindungsventil, insbesondere Auslassventil, 3/2-Solenoid-Ventil
- 11a: Eingang des Auslassventils
- 11b: Ausgang de Auslassventils
- 11c: elektrischer Steuereingang
- 11d: Entlüftung

- 14: Relaisventil
- 14a: Eingang des Relaisventils
- 14b: Ausgang des Relaisventils
- 14c: pneumatischer Steuereingang des Relaisventils
- 14d: Entlüftung des Relaisventils
- 15: Relaisventil-Vorsteuerbereich
- 16: Rückschlagventil
- 17: TCV-Vorsteuerbereich
- 18: Bypass-Eingangs-Ventil
- 19: Drossel (Eingangs-Drossel)
- 20: Bypass-Ausgangs-Ventil
- 21: Drossel (Ausgangs-Drossel)
- 22: Drucksensor

- 24: select-high-ventil
- 24a: erster Eingang des select-high-Ventils 24
- 24b: zweiter Eingang des select-high-Ventils 24
- 24c: Ausgang des select-high-Ventils 24

- 26: TCV-Ansteuerventil
- 26b: zweiter Eingangsanschluss
- 26d: pneumatischer Steuereingang

- S1: erstes elektrisches Steuersignal
- S2: zweites elektrisches Steuersignal

- p0: Systemdruck

## Patentansprüche

1. Parkbrems-Ventileinrichtung (1) zur Ansteuerung einer Federspeicher-Feststellbremse (4) in einem elektro-pneumatischen Bremssystem (2), wobei die elektro-pneumatische Parkbrems-Ventileinrichtung (1) aufweist:
einen Druckluft-Eingang (1a) zum Anschluss an eine Druckluft-Versorgung (3),
einen Parkbrems-Ausgang (1b) zur Ansteuerung einer Federspeicher-Feststellbremse (4),
einen trailer-control-Steuerausgang (1c) zur Ansteuerung eines trailer-control-Ventils (6) für ein Anhänger-Bremssystem (5), wobei der trailer-control-Steuerausgang (1c) belüftbar ist zum Lösen des Anhänger-Bremssystems (5),
einen Relaisventil-Vorsteuerbereich (15) und ein durch den Relaisventil-Vorsteuerbereich (15) ansteuerbares Relaisventil (14), das in seiner betätigten Stellung den Druckluft-Eingang (1a) an den Parkbrems-Ausgang (1b) legt und in seiner unbetätigten Stellung den Parkbrems-Ausgang (1b) entlüftet,
einen TCV-Vorsteuerbereich (17) zur Ansteuerung des trailer-control-Steuerausgangs (1c),
ein mit einem ersten elektrischen Steuersignal (S1) ansteuerbares Einlass-Ventil (10) zum Belüften des TCV-Vorsteuerbereichs (17) und des Relaisventil-Vorsteuerbereichs (15),
ein durch ein zweites elektrisches Steuersignal (S2) ansteuerbares Verbindungs-Ventil (11) zum Verbinden und Trennen des TCV- Vorsteuerbereichs (17) und des Relaisventil-Vorsteuerbereichs (15),
wobei durch Einstellen lediglich des Einlass-Ventils (10) und des Verbindungs-Ventils (11) folgende Stellungen einstellbar sind:
eine Fahrstellung mit belüftetem Parkbrems-Ausgang (1b) und belüftetem trailer-control-Steuerausgang (1c),
eine Parkstellung mit entlüftetem Parkbrems-Ausgang (1b) und entlüftetem trailer-control-Steuerausgang (1c),
eine Anhänger-Kontroll-Stellung mit entlüftetem Parkbrems-Ausgang (1b) und belüftetem trailer-control-Steuerausgang (1c),
**dadurch gekennzeichnet, dass**
in der Fahrstellung und in der Parkstellung das Verbindungs-Ventil (11) den TCV- Vorsteuerbereich (17) und den Relaisventil-Vorsteuerbereich verbindet.

2. Parkbrems-Ventileinrichtung (1) nach Anspruch 1, **dadurch gekennzeichnet, dass** das Verbindungs-Ventil (11) in seiner trennenden Stellung den Relaisventil-Vorsteuerbereich (15) entlüftet, vorzugsweise als elektrisch angesteuertes 3/2-Wegeventil, z. B. mit verbindender Grundstellung.

3. Parkbrems-Ventileinrichtung (1) nach einem der vorherigen Ansprüche, **dadurch gekennzeichnet, dass**
das Einlass-Ventil (10) ein elektrisch angesteuertes 2/2-Sperrventil, vorzugsweise selbstsperrendes 2/2-Sperrventil ist.

4. Parkbrems-Ventileinrichtung (1) nach einem der vorherigen Ansprüche, **dadurch gekennzeichnet, dass** an den Relaisventil-Vorsteuerbereich (15) eine Bypass-Schaltung (18, 19, 20, 21) zum selbsttätigen Halten eines Druckzustandes des Relaisventil- Vorsteuerbereichs (15) angeschlossen ist.

5. Parkbrems-Ventileinrichtung (1) nach Anspruch 4, **dadurch gekennzeichnet, dass** die Bypass-Schaltung (18, 19, 20, 21) den Relaisventil-Vorsteuerbereich (15) und den hieran angeschlossenen pneumatischen Steuereingang (14c) des Relaisventils (14) bei Vorliegen eines hinreichenden Aussteuer-Schaltdrucks selbsttätig mit dem Druckluft-Eingang (1a) und/oder dem Relaisventil-Eingang (14a) verbindet und in der verbundenen Stellung hält, bis der Relaisventil-Vorsteuerbereich (15) aktiv entlüftet wird.

6. Parkbrems-Ventileinrichtung (1) nach Anspruch 5, **dadurch gekennzeichnet, dass** die Bypass-Schaltung (18, 19, 20, 21) den Relaisventil-Vorsteuerbereich (15) und den hieran angeschlossenen pneumatischen Steuereingang (14c) des Relaisventils (14) bei Vorliegen eines hinreichenden Aussteuer-Schaltdrucks selbsttätig mit dem Druckluft-Eingang (1a) und/oder dem Relaisventil-Eingang (14a) verbindet, vorzugsweise auch bei nachfolgendem Sperren des Verbindungsventils (11).

7. Parkbrems-Ventileinrichtung nach einem der Ansprüche 4 bis 6, **dadurch gekennzeichnet, dass** der Relaisventil-Vorsteuerbereich (15) im entlüfteten Zustand, insbesondere nach aktiver Entlüftung durch das zweite elektrische Steuersignal (S2), durch die Bypass-Schaltung (18, 19, 20, 21) selbsttätig in dem entlüfteten Zustand gehalten wird, indem die Bypass-Schaltung (18, 19, 20, 21) den Relaisventil-Vorsteuerbereich (15) an eine Entlüftung (1d) legt.

8. Parkbrems-Ventileinrichtung nach einem der Ansprüche 4 bis 7,
**dadurch gekennzeichnet, dass** der Relaisventil-Vorsteuerbereich (15) durch die Bypass-Ventil-Einrichtung mit dem Druckluft-Eingang (1a) oder der Entlüftung jeweils über eine Drossel (19, 20) und ein pneumatisch angesteuertes Sperrventil (18, 20) verbunden ist, zur Kompensation kleinerer Luftströme, insbesondere von Leckage-Strömen,
wobei mindestens eines der Sperrventile (18, 20) offen ist zur Verbindung des Relaisventil-Vorsteuerbereichs (15) mit dem Druckluft-Eingang (81a) und/oder der Entlüftung.

9. Parkbrems-Ventileinrichtung nach Anspruch 8, **dadurch gekennzeichnet, dass** nur jeweils eines der Sperrventile (18, 20) offen ist zur Verbindung des Relaisventil-Vorsteuerbereichs (15) mit entweder dem Druckluft-Eingang (81a) oder der Entlüftung, und das andere Sperrventil (18, 20) geschlossen ist.

10. Parkbrems-Ventileinrichtung (1) nach Anspruch 8 oder 9, **dadurch gekennzeichnet, dass** die Sperrventile (18, 20) von dem Relaisventil-Vorsteuerbereich (15) angesteuert sind, wobei ein Eingangs-Bypass-Ventil (18) selbstsperrend und ein Ausgangs-Bypass-Ventil in der Grundstellung offen ist.

11. Parkbrems-Ventileinrichtung (1) nach einem der vorherigen Ansprüche, **dadurch gekennzeichnet, dass** der TCV-Vorsteuerbereich (17) direkt an den TCV-Steuerausgang (1c) angeschlossen ist.

12. Parkbrems-Ventileinrichtung nach einem der Ansprüche 1 bis 10, **dadurch gekennzeichnet, dass** der TCV-Vorsteuerbereich (17) über ein select-high-Ventil (24) an den trailer-control-Ausgang (1c) angeschlossen ist, wobei das select-high-Ventil (24) weiterhin mit dem Parkbrems-Ausgang (1b) verbunden ist, zur Druckluft-Ansteuerung des trailer-control-Steuerausgangs (1c) im Falle einer Aussteuerung des Relaisventils (14) über den Relaisventil-Vorsteuerbereich (15) und/oder einer Druckluft-Aussteuerung des TCV-Vorsteuerbereichs (17).

13. Parkbrems-Ventileinrichtung (1) nach einem der Ansprüche 1 bis 10, **dadurch gekennzeichnet, dass**
der TCV-Vorsteuerbereich (17) mit dem trailer-control-Steuerausgang (1c) über ein TCV-Ansteuerventil (26) verbunden ist, das ein in Abhängigkeit des TCV-Vorsteuerbereichs (17) pneumatisch ansteuerbares Schaltventil ist, das unterhalb eines Schaltdrucks im TCV-Vorsteuerbereich (17) den trailer-control-Ausgang (1c) mit dem Parkbrems-Ausgang (1b) verbindet und oberhalb des Schaltdrucks den trailer-control-Ausgang (1c) an den TCV-Vorsteuerbereich (17) legt.

14. Elektro-pneumatisches Bremssystem (2), das aufweist:
eine Parkbrems-Ventileinrichtung (1) nach einem der vorherigen Ansprüche, eine elektronische Steuereinrichtung (8) zur Ausgabe des ersten elektrischen Steuersignals (S1) an das Einlass-Ventil (10) und des zweiten elektrischen Steuersignals (S2) an das Verbindungs-Ventil (11), zur Einstellung der Fahrstellung oder der Parkstellung oder der Anhänger-Kontrollstellung, eine an den Druckluft-Eingang (1a) angeschlossene Druckluft-Versorgung, z. B. einen Druckluft-Speicher (3),
eine an den Parkbrems-Ausgang (1b) angeschlossene Federspeicher-Feststellbremse (4), und
ein an dem trailer-control-Steuerausgang (1c) angeschlossenes trailer-control-Ventil (6) zur Ansteuerung des Anhänger-Bremssystems (5), wobei das trailer-control-Ventil (6) bei Belüften des trailer-control-Steuerausgangs (1c) das Anhänger-Bremssystems (5) entlüftet und bei Entlüften des trailer-control-Steuerausgangs (1c) das Anhänger-Bremssystems (5) belüftet.

## Claims

1. A parking brake valve device (1) for controlling a storage spring parking brake (4) in an electropneumatic brake system (2), wherein the electropneumatic parking brake valve device (1) comprises:
a compressed air input (1a) configured to be connected to a compressed air supply (3),
a parking brake output (1b) configured to control a storage spring parking brake (4),
a trailer-control control output (1c) configured to control a trailer control valve (6) for a trailer brake system (5), the trailer-control control output (1c) being configured to be supplied with air for releasing the trailer brake system (5),
a relay valve pilot control region (15) and a relay valve (14) configured to be controlled by the relay valve pilot control region (15), which connects the compressed air input (1a) to the parking brake output (1b) when in an operated position and which vents the parking brake output (1b) when in a non-operated position,
a TCV pilot control region (17) configured to control the trailer-control control output (1c),
an inlet valve (10) configured to be controlled with a first electrical control signal (S1) for supplying air to the TCV pilot control region (17) and the relay valve pilot control region (15),
a connecting valve (11) configured to be controlled by a second control signal (S2) to connect and disconnect the TCV pilot control region (17) and the relay valve pilot control region (15),
wherein the following settings are configured to be set by setting only the inlet valve (10) and the connecting valve (11) :
a driving setting with the parking brake output (1b) supplied with air and the trailer-control control output (1c) supplied with air,
a parking setting with the parking brake output (1b) vented and the trailer-control control output (1c) vented,
a trailer control setting with the parking brake output (1b) vented and the trailer-control control output (1c) supplied with air,
**characterized in that**
the connecting valve (11) is configured to connect, in the driving setting and the parking setting, the TCV pilot control region (17) and the relay valve pilot control region.

2. The parking brake valve device (1) according to claim 1, **characterized in that** the connecting valve (11) is configured to vent, in a disconnecting setting, the relay valve pilot control region (15), preferably as an electrically controlled 3/2-way valve, e.g., with a connecting basic setting.

3. The parking brake valve device (1) according to any of the preceding claims, **characterized in that** the inlet valve (10) is an electrically controlled 2/2 check valve, preferably a self-locking 2/2 check valve.

4. The parking brake valve device (1) according to any of the preceding claims, **characterized in that** a bypass circuit (18, 19, 20, 21) configured to automatically hold a pressure state of the relay valve pilot control region (15) is connected to the relay valve pilot control region (15).

5. The parking brake valve device (1) according to claim 4, **characterized in that** the bypass circuit (18, 19, 20, 21) is configured to automatically connect the relay valve pilot control region (15) and the pneumatic control input (14c) of the relay valve (14) that is connected thereto to the compressed air input (1a) and/or the relay valve input (14a) in the presence of a sufficient actuation switching pressure and to hold the connected position until the relay valve pilot control region (15) is actively vented.

6. The parking brake valve device (1) according to claim 5, **characterized in that** the bypass circuit (18, 19, 20, 21) is configured to automatically connect the relay valve pilot control region (15) and the pneumatic control input (14c) of the relay valve (14) that is connected thereto to the compressed air input (1a) and/or the relay valve input (14a) in the presence of a sufficient actuation switching pressure, preferably even in the case of subsequent locking of the connecting valve (11).

7. The parking brake valve device according to any of claims 4 to 6, **characterized in that** in the vented state, in particular after active venting by the second electrical control signal (S2), the relay valve pilot control region (15) is automatically kept in the vented state by the bypass circuit (18, 19, 20, 21), **in that** the bypass circuit (18, 19, 20, 21) connects the relay valve pilot control region (15) to a vent (1d).

8. The parking brake valve device according to any of claims 4 to 7, **characterized in that** the relay valve pilot control region (15) is connected by the bypass valve device to the compressed air input (1a) or the vent respectively via a choke (19, 20) and a pneumatically controlled check valve (18, 20) to compensate for small air flows, in particular leakage flows,
wherein at least one of the check valves (18, 20) is open to connect the relay valve pilot control region (15) to the compressed air input (81a) and/or the vent.

9. The parking brake valve device according to claim 8, **characterized in that** only one of the check valves (18, 20) is open for connecting the relay valve pilot control region (15) to either the compressed air input (81a) or the vent, and the other check valve (18, 20) is closed.

10. The parking brake valve device (1) according to claim 8 or 9, **characterized in that** the check valves (18, 20) are controlled by the relay valve pilot control region (15), wherein an input bypass valve (18) is self-locking and an output bypass valve is open when in the basic setting.

11. The parking brake valve device (1) according to any of the preceding claims, **characterized in that** the TCV pilot control region (17) is directly connected to the TCV control output (1c).

12. The parking brake valve device according to any of claims 1 to 10, **characterized in that** the TCV pilot control region (17) is connected to the trailer control output (1c) via a select-high valve (24),
wherein the select-high valve (24) is connected to the parking brake output (1b) for compressed air control of the trailer-control control output (1c) in case of actuation of the relay valve (14) by the relay valve pilot control region (15) and/or compressed air actuation of the TCV pilot control region (17).

13. The parking brake valve device (1) according to any of claims 1 to 10, **characterized in that**
the TCV pilot control region (17) is connected to the trailer-control control output (1c) via a TCV control valve (26), the TCV control valve being a switching valve that can be pneumatically controlled depending on the TCV pilot control region (17), which is configured to connect the trailer control output (1c) to the parking brake output (1b) when the pressure is below the switching pressure in the TCV pilot control region (17) and is configured to connect the trailer-control output (1c) to the TCV pilot control region (17) above the switching pressure.

14. An electropneumatic brake system (2), comprising:
a parking brake valve device (1) according to any of the preceding claims,
an electronic control device (8) configured to output the first electrical control signal (S1) to the inlet valve (10) and the second electrical control signal (S2) to the connecting valve (11) for setting the driving setting or the parking setting or the trailer control setting,
a compressed air supply, e.g., a compressed air storage (3), connected to the compressed air input (1a),
a storage spring parking brake (4) connected to the parking brake output (1b), and
a trailer control valve (6) connected to the trailer-control control output (1c) for controlling the trailer brake system (5), wherein the trailer control valve (6) is configured to vent the trailer brake system (5) when the trailer-control control output (1c) is supplied with air and is configured to supply the trailer brake system (5) with air when the trailer-control control output (1c) is vented.

## Revendications

1. Dispositif de valve de frein à main (1) destiné à piloter un frein de stationnement d'accumulateur élastique (4) dans un système de freinage (2) électropneumatique, dans lequel le dispositif de valve de frein à main (1) électropneumatique présente :
une entrée d'air comprimé (1a) pour le raccordement à une alimentation en air comprimé (3),
une sortie de frein à main (1b) pour le pilotage d'un frein de stationnement d'accumulateur élastique (4),
une sortie de pilotage de commande de remorque (1c) pour le pilotage d'une valve de commande de remorque (6) pour un système de freinage de remorque (5), dans lequel la sortie de pilotage de commande de remorque (1c) peut être ventilée pour libérer le système de freinage de remorque (5),
une zone de pré-pilotage de valve-relais (15) et une valve-relais (14) qui peut être pilotée par la zone de pré-pilotage de valve-relais (15), laquelle valve-relais, dans sa position actionnée, pose l'entrée d'air comprimé (1a) contre la sortie de frein à main (1b) et, dans sa position non actionnée, purge la sortie de frein à main (1b),
une zone de pré-pilotage de VCT (17) pour le pilotage de la sortie de pilotage de commande de remorque (1c),
une valve d'admission (10) qui peut être pilotée avec un premier signal de pilotage (S1) électrique pour ventiler la zone de pré-pilotage de VCT (17) et la zone de pré-pilotage de valve-relais (15),
une valve de liaison (11) qui peut être pilotée par un second signal de pilotage (S2) électrique pour relier et séparer la zone de pré-pilotage de VCT (17) et la zone de pré-pilotage de valve-relais (15),
dans lequel, par le réglage de seulement la valve d'admission (10) et la valve de liaison (11), les positions suivantes peuvent être réglées :
une position de roulage avec une sortie de frein à main (1b) ventilée et une sortie de pilotage de commande de remorque (1c) ventilée,
une position de stationnement avec une sortie de frein à main (1b) purgée et une sortie de pilotage de commande de remorque (1c) purgée,
une position de commande de remorque avec une sortie de frein à main (1b) purgée et une sortie de pilotage de commande de remorque (1c) ventilée,
**caractérisé en ce que**
dans la position de roulage et dans la position de stationnement, la valve de liaison (11) relie la zone de pré-pilotage de VCT (17) et la zone de pré-pilotage de valve-relais.

2. Dispositif de valve de frein à main (1) selon la revendication 1, **caractérisé en ce que**, dans sa position de séparation, la valve de liaison (11) purge la zone de pré-pilotage de valve-relais (15), de préférence en tant que distributeur 3/2 voies électriquement piloté, p. ex. avec une position de base de liaison.

3. Dispositif de valve de frein à main (1) selon l'une des revendications précédentes, **caractérisé en ce que**
la valve d'admission (10) est une valve d'arrêt 2/2 voies électriquement pilotée, de préférence une valve d'arrêt 2/2 voies autobloquante.

4. Dispositif de valve de frein à main (1) selon l'une des revendications précédentes, **caractérisé en ce qu'**une commutation de dérivation (18, 19, 20, 21) est raccordée à la zone de pré-pilotage de valve-relais (15) pour le maintien automatique d'un état de pression de la zone de pré-pilotage de valve-relais (15).

5. Dispositif de valve de frein à main (1) selon la revendication 4, **caractérisé en ce que** la commutation de dérivation (18, 19, 20, 21) relie automatiquement, en présence d'une pression de commutation de pilotage suffisante, la zone de pré-pilotage de valve-relais (15) et l'entrée de pilotage (14c) pneumatique de la valve-relais (14), ladite entrée de pilotage étant raccordée à ladite zone de pré-pilotage de valve-relais, avec l'entrée d'air comprimé (1a) et/ou l'entrée de valve-relais (14a) et maintient la position de liaison jusqu'à ce que la zone de pré-pilotage de valve-relais (15) soit activement purgée.

6. Dispositif de valve de frein à main (1) selon la revendication 5, **caractérisé en ce que** la commutation de dérivation (18, 19, 20, 21) relie automatiquement, en présence d'une pression de commutation de pilotage suffisante, la zone de pré-pilotage de valve-relais (15) et l'entrée de pilotage (14c) pneumatique de la valve-relais (14), ladite entrée de pilotage étant raccordée à ladite zone de pré-pilotage de valve-relais, avec l'entrée d'air comprimé (1a) et/ou l'entrée de valve-relais (14a), de préférence également après blocage ultérieur de la valve de liaison (11).

7. Dispositif de valve de frein à main selon l'une des revendications 4 à 6, **caractérisé en ce que** la zone de pré-pilotage de valve-relais (15) à l'état de purge, en particulier après la purge active par le second signal de pilotage (S2) électrique, est automatiquement maintenue à l'état de purge par la commutation de dérivation (18, 19, 20, 21) **en ce que** la commutation de dérivation (18, 19, 20, 21) pose la zone de pré-pilotage de valve-relais (15) contre une purge (1d).

8. Dispositif de valve de frein à main selon l'une des revendications 4 à 7, **caractérisé en ce que** la zone de pré-pilotage de valve-relais (15) est reliée à l'entrée d'air comprimé (1a) ou à la purge par le dispositif de valve de dérivation respectivement via un étranglement (19, 20) et une valve d'arrêt (18, 20) pilotée de façon pneumatique, pour la compensation de flux d'air plus petits, en particulier de flux de fuite,
dans lequel au moins l'une des valves d'arrêt (18, 20) est ouverte pour la liaison de la zone de pré-pilotage de valve-relais (15) avec l'entrée d'air comprimé (81a) et/ou la purge.

9. Dispositif de valve de frein à main selon la revendication 8, **caractérisé en ce que** seule respectivement l'une des valves d'arrêt (18, 20) est ouverte pour la liaison de la zone de pré-pilotage de valve-relais (15) avec soit l'entrée d'air comprimé (81a) soit la purge, et l'autre valve d'arrêt (18, 20) est fermée.

10. Dispositif de valve de frein à main (1) selon la revendication 8 ou 9, **caractérisé en ce que** les valves d'arrêt (18, 20) sont pilotées par la zone de pré-pilotage de valve-relais (15), dans lequel une valve de dérivation d'entrée (18) est autobloquante et une valve de dérivation de sortie est ouverte dans la position de base.

11. Dispositif de valve de frein à main (1) selon l'une des revendications précédentes, **caractérisé en ce que** la zone de pré-pilotage de VCT (17) est directement raccordée à la sortie de pilotage de VCT (1c).

12. Dispositif de valve de frein à main selon l'une des revendications 1 à 10, **caractérisé en ce que** la zone de pré-pilotage de VCT (17) est raccordée à la sortie de commande de remorque (1c) via une valve à sélection haute (24), dans lequel la valve à sélection haute (24) est en outre reliée à la sortie de frein à main (1b) pour un pilotage d'air comprimé de la sortie de pilotage de commande de remorque (1c) dans le cas d'un pilotage de la valve-relais (14) via la zone de pré-pilotage de valve-relais (15) et/ou d'un pilotage d'air comprimé de la zone de pré-pilotage de VCT (17).

13. Dispositif de valve de frein à main (1) selon l'une des revendications 1 à 10, **caractérisé en ce que**
la zone de pré-pilotage de VCT (17) est reliée à la sortie de pilotage de commande de remorque (1c) via une valve de pilotage de VCT (26), qui est une valve de commutation qui peut être pilotée de façon pneumatique en fonction de la zone de pré-pilotage de VCT (17), qui, en-dessous d'une pression de commutation dans la zone de pré-pilotage de VCT (17), relie la sortie de commande de remorque (1c) à la sortie de frein à main (1b) et, au-dessus de la pression de commutation pose la sortie de commande de remorque (1c) contre la zone de pré-pilotage de VCT (17).

14. Système de freinage (2) électropneumatique qui présente :
un dispositif de valve de frein à main (1) selon l'une des revendications précédentes,
un dispositif de pilotage (8) électronique pour l'émission du premier signal de pilotage (S1) électrique vers la valve d'admission (10) et du second signal de pilotage (S2) électrique vers la valve de liaison (11), pour le réglage de la position de roulage ou de la position de stationnement ou de la position de commande de remorque,
une alimentation en air comprimé raccordée à l'entrée d'air comprimé (1a), p. ex. un accumulateur en air comprimé (3),
un frein de stationnement d'accumulateur élastique (4) raccordé à la sortie de frein à main (1b), et
une valve de commande de remorque (6) raccordée à la sortie de pilotage de commande de remorque (1c) pour le pilotage du système de freinage de remorque (5), dans lequel la valve de commande de remorque (6) purge le système de freinage de remorque (5) lors de la ventilation de la sortie de pilotage de commande de remorque (1c) et ventile le système de freinage de remorque (5) lors de la purge de la sortie de pilotage de commande de remorque (1c).
